# EUROPÄISCHE PATENTANMELDUNG

(11) **EP 1 162 409 A1**
(43) Veröffentlichungstag der Anmeldung: **12.12.2001**
(21) Anmeldenummer: 00111890.0
(22) Anmeldetag: 09.06.2000
(51) Int. Cl.: F24D 3/16, F24F 5/00

(54) **Flächentemperiersystem**

(71) Anmelder: Hexatherm Energietechnik Ges.m.b.H., 3370 Ybbs/Donau (AT)
(72) Erfinder: Steiner, Josef, 3370 Ybbs (AT)

(57) **Zusammenfassung**

Die Erfindung bezieht sich auf ein Flächentemperiersystem mit Rohren (1) bzw. Schläuchen vorzugsweise aus Kunststoff, wobei die Rohre (1) an der einer Auflage, beispielsweise einem Deckenpaneel (2) oder dergl. zugewandten Seite eine Auflagefläche (1a) aufweisen, wodurch sie gegenüber außen runden Rohren eine bessere Wärmeübergangszahl haben.

## Beschreibung

Die Erfindung betrifft ein Flächentemperiersystem mit auf einer Auflage, beispielsweise einem Deckenpaneel verlegten Rohrleitungen aus Kunststoff mit beliebigem Durchmesser.

Insbesondere in Nutzgebäuden installierte Kommunikationssysteme mit ihren meist großen Anzahl gleichzeitig in Dauerbetrieb arbeitenden Computern etc. lassen immer höhere Wärmelasten entstehen, die wiederum den Heizwärmebedarf verringern, während der Kühlbedarf steigt. Andererseits erfordert die Klimatisierung derartiger Gebäude mittels Luftumwälzung, d.h. Luft als Temperiermedium einen unverhältnismäßig hohen Energiebedarf. Ganz abgesehen davon, daß durch diese Art der Raumklimatisierung ein äußerst ungesundes Raumklima entsteht. Aus diesen Gründen haben sich in den letzten Jahren sogen. Temperierdecken durchgesetzt. Dabei werden in den Raumdecken, bei entsprechenden Bedarf auch in den Wänden und Böden, von einem Temperiermedium durchflossene Rohrsysteme integriert. Steigt der Wärmebedarf, fließt durch das Rohrsystem ein erwärmtes Fluid, wird Kühlung benötigt, ein abgekühltes Fluid.

Für Büro- und Verwaltungsgebäude haben sich in letzter Zeit überwiegend abgehängte Deckensysteme durchgesetzt. In dem so entstandenen Hohlraum können, außer dem Temperiersystem mit seinen Rohren, Installationssysteme der verschiedensten Art, auch nachträglich, noch untergebracht werden. Ein Temperiersystem mit von warmen, bzw. kalten Fluid durchflossenen Rohren ist in Regel auf einer Auflage, beispielsweise einem Deckenpaneel, bestehend aus dünnen Metall-, Gips-, oder dergl. Plattenelementen montiert, wobei die Rohre hohlraumseitig angeordnet sind.

Solche Flächentemperiersysteme sind als vorgefertigte oder vor Ort verlegte Fußboden-, Wand- oder Deckenheizungen, bzw. -kühlungen an sich bekannt Die Rohrleitungen, meist aus Kunststoff, werden dabei in Mäandern z.B. auf Estrich, Ziegelwänden, Betondecken, Deckenpaneelen usw. verlegt und gegenüber dem zu temperierenden Raum mit einer Platte oder dergl. abgedeckt, wie beispielsweise die DE-OS 44 39 089 eine solche Flächenheizung als beheizbare Wandverkleidungsplatte offenbart. Weitere derartige Flächenheizungen sind beispielsweise der DE-OS 39 08 108, DE-OS 40 20 970, DE-OS 41 14 833, DE-OS 42 02 875, DE-OS 196 19 912 und der US-PS 4646 814 zu entnehmen.

Auf der dem zu beheizenden Raum zugewandten Platte aus dünnem Metallblech, Gipskarton etc., beispielsweise einem Deckenpaneel, liegen die einen runden Querschnitt aufweisenden Rohrleitungen auf, falls sie nicht, wie bei Fußbodenheizungen üblich, im Estrich eingebettet sind. Naturgemäß ist die Auflage der meist nur einen geringen Durchmesser (ca. 6 - 8 mm) aufweisenden runden Rohrleitungen auf dieser Platte linienförmig. Aber auch größere Rohrdurchmesser verbessern den Wärmeübergang vom Rohr zur Auflage nur unerheblich; denn die Kontaktfläche Rohr - Auflage ist immer nur minimal, selbst Rohre mit ovalem Querschnitt haben für dieses Einsatzgebiet keine Verbesserung gebracht. Der Wärmeaustausch von der Rohrleitung in den zu temperierenden Raum ist dementsprechend schlecht, rasche Temperaturwechsel sind nicht möglich, was den Wirkungsgrad des gesamten Systems negativ beeinflußt. Selbstverständlich spielt dabei auch die Wärmeleitung der Platte eine Rolle.

Um dieses Problem zu lösen sind bereits verschiedene Vorschläge unterbreite worden. So zeigt u.a. die DE-PS 43 26 009 C1 mit der eine Deckenstrahlungsheizung mit einer nach unten offenen Wanne vorgeschlagen wird, die einen guten Wirkungsgrad aufweist, da keine durchgehende Abdeckung erforderlich ist. Es liegt auf der Hand, daß solche Konstruktionen für verdeckt angebrachte Wand- bzw. Fußbodenheizungen etc. nicht eingesetzt werden können. Um den Wirkungsgrad solcher Heiz- und Kühlsysteme zu verbessern, kann, wie z.B. die DE-OS 196 01 590, die DE-OS 196 25 050 und die UK 2 271 174 A offenbaren, ein Heiz- oder Kühlmedium führendes Rohr auch in ein das Rohr nach hinten, zur Wand, bzw. Boden abschirmendes Blech gelegt werden und ggfl. in die Kanäle in die die Rohrmäander verlegt sind seitlich einen Füllstoff einzubringen. Die Rohre selbst sind stets rund ausgebildet, d.h. die Rohrmäntel sind ebenfalls, wie der innere Durchmesser rund, so daß eine Optimierung des Wirkungsgrades eines solchen Flächenheizunssystemes mit diesen Maßnahmen nicht erreichbar ist.

Um den Wärmeübergang vom Rohrregister zur Deckenpaneel oder dergl. zu verbessern, ist der Abstand der einzelnen Rohrabschnitte untereinander auf etwa 10 bis 15 mm. reduziert worden, was andererseits einen höheren Materialaufwand und damit entsprechend höhere Preise bedingt. Durch den Einbau von Wärmeleitblechen, die beispielsweise auf die Rohre geklemmt werden, kann zwar der Rohrabstand wieder vergrößert werden, jedoch verschlechtert sich durch diese Maßnahme, bei unverhältnismäßig hohen Kosten zusätzlich die Schalldämmung.

Der Erfindung, wie sie in den Ansprüchen beschrieben ist, liegt daher die Aufgabe zugrunde, ein Flächentemperierungssystem zu schaffen, daß die Nachteile der bekannten Systeme dieser Art nicht mehr aufweist, einen besseren Wirkungsgrad aufweist und auch in Mäandern, bzw. Schlangenlinien verlegbar ist, ohne daß Knickstellen auftreten.

Die Vorteile der mit der Erfindung vorgeschlagenen Problemlösung liegen einerseits darin, daß bereits bei einem Kunststoffrohr mit einem Außendurchmesser von 6 mm bei einem Innendurchmesser von 4,5 mm mit einem Fuß von etwa 4,5 mm die Kontaktfläche zwischen dem fluiddurchströmten Rohrregister und dem Deckenpaneel oder dergl. die Kontaktfläche um mindestens etwa 10 % erhöht wird; anstelle einer Wärmeabgabe zum zu temperierenden Raum hin von 69 W, ohne zusätzliche Maßnahmen, 79 Watt erzielbar ist; eine Verlegung in engen Radien, ohne das Auftreten von Knickstellen möglich ist; selbst rasche Temperaturwechsel weitergeleitet werden und die Herstellung vorgefertigter Flächentemperiersysteme sich problemlos gestaltet, wobei die Schallabsorption zusätzlich optimiert ist. Außerdem wird durch den Einsatz der Erfindung der Materialaufwand reduziert, weil größere Rohrabstände möglich sind, womit wiederum eine erhebliche Kostenreduzierung bei höherer Heiz-, bzw. Kühlleistung verbunden ist.

Die Erfindung ist nachstehend anhand eines in den Abbildungen dargestellten Ausführungsbeispieles näher erläutert.

Es zeigt:
- Fig. 1: ein in Mäandern auf einer Decke oder dergl. verlegtes FlächentemperierSystem in Draufsicht und
- Fig. 2: Ausführungsvarianten der Rohrquerschnitte gem. Fig. 1.

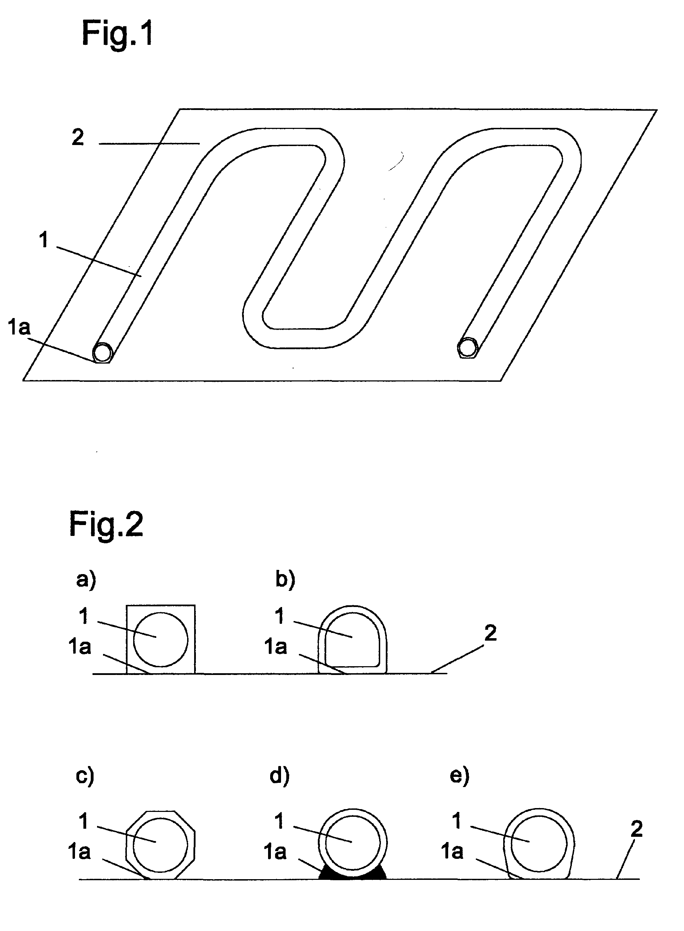

Wie aus Fig. 1 ersichtlich, besteht das Flächentemperiersystem aus einer beispielsweise mäanderförmig verlegten Rohrschlange, deren Rohr oder Schlauch 1 vorzugsweise aus einem geeigneten Kunststoffmaterial, beispielsweise PB oder PE besteht. Das Rohr 1 hat bis auf seiner einer Auflage 2, beispielsweise einem Deckenpaneel, zugewandten Oberfläche einen im wesentlichen runden oder ovalen Querschnitt. Der die Auflage 2 berührende Rohrbereich ist zu einem Fuß 1a als Auflagefläche geformt, der maximal etwa so breit ist, wie der äußere Rohrdurchmesser, wodurch das Rohr eine etwa Ω-förmige Ausbildung erhält. Für ein Rohr mit einem Außendurchmesser von 6 mm und einem Innendurchmesser von 4,5 mm hat sich ein Fuß mit einer Auflagefläche von etwa 4,5 mm als vorteilhaft erwiesen.

Das erfindungsgemäß vorgeschlagene Temperiersystem kann z.B. auch als vorgefertigtes Rohrregister mit Abstandshaltem auf Deckenpaneelen oder sonstigen Platten, wie von Wandheizungen/-kühlungen usw. verlegt werden.

Verschiedene Ausführungsvarianten des Querschnittes der erfindungsgemäß vorgeschlagenen Rohrprofils zeigt die Fig. 2a bis 2e. Die Ω-förmige Ausführungsvariante gem. Fig. 2e hat sich als besonders vorteilhaft für die Verlegung in Mäandern oder Spiralen, bzw. Rohrschlangen mit engen Radien an den Umlenkstellen auf Deckenpaneelen erwiesen.

In den Umlenkbereichen der Rohrschlange stört diese Ω-förmige Ausbildung des Rohres solange nicht, als sie keine allzu enge Radien aufweisen. Diese Biegeradien befinden sich durchweg im Bereich der normalen Umlenkbereiche der Kunststoffrohre, sie sind abhängig vom jeweiligen Durchmesser des Rohres.

Die Erfindung ist selbstverständlich weder auf Kunststoffrohre, noch auf die dargestellten Profilformen und die Verlegung auf Deckenpaneelen beschränkt. Sie kann vielmehr überall dort mit Erfolg angewandt werden, wo der Wärmeübergang von einem Rohr über eine Auflagefläche zum zu temperierenden Raum verbessert werden soll.

### Bezugszeichenliste

- 1: Rohr
- 1a: Fuß
- 2: Deckenpaneel

## Patentansprüche

1. Flächentemperiersystem mit auf einer Auflage, beispielsweise einem Dekkenpaneel oder dergl., verlegten Rohrleitungen aus Kunststoff mit beliebigem Durchmesser, **dadurch gekennzeichnet, daß** die Rohre (1) gegenüber der Oberfläche des Deckenpaneels (2) eine ebene Auflagefläche (1a) aufweisen.

2. Flächentemperiersystem nach Anspruch 1, **dadurch gekennzeichnet, daß** die Auflagefläche (1a) den Außendurchmesser des Rohres (1) nicht überschreitet.

3. Flächentemperiersystem nach Anspruch 1 und 2, **dadurch gekennzeichnet, daß** zumindest in Umlenkbereichen mit sehr geringen Radien die Auflagefläche (1a) des Rohres (1) nicht vorhanden ist.

4. Flächentemperiersystem nach Anspruch 1 bis 3, **dadurch gekennzeichnet, daß** das Rohr (1) mit den Auflageflächen (1a) im Urformprozeß erzeugt ist.

5. Flächentemperiersystem nach Anspruch 1 und einen der folgenden, **dadurch gekennzeichnet**, die Rohre (1) eine etwa Ω-förmige Ausbildung aufweisen.
